Europäisches Patentamt

European Patent Office

Office européen des brevets

(19)

(11) Veröffentlichungsnummer: **0 129 040**

**A1**

(12)                    EUROPÄISCHE PATENTANMELDUNG

(21) Anmeldenummer: 84105273.1

(22) Anmeldetag: 10.05.84

(51) Int. Cl.³: **B 62 J 5/20**

(30) Priorität: 21.06.83 DE 3322182

(43) Veröffentlichungstag der Anmeldung:
27.12.84 Patentblatt 84/52

(84) Benannte Vertragsstaaten:
AT BE CH DE FR GB IT LI LU NL SE

(71) Anmelder: ULO-Werk Moritz Ullmann GmbH + Co. KG
Robert-Bosch-Strasse 1-12
D-7340 Geislingen(DE)

(72) Erfinder: Kirschner, Rudolf
Zillerstallstrasse 24
D-7340 Geislingen(DE)

(72) Erfinder: Lea, Steffi, geb. Schulze
Eichenhang 2
D-7341 Amstetten(DE)

(74) Vertreter: Wilhelm, Hans-Herbert, Dr.-Ing. et al,
Patentanwälte Dr.-Ing. Hans-Herbert Wilhelm Dipl.-Ing.
Hanjörg Dauster Gymnasiumstrasse 31B
D-7000 Stuttgart 1(DE)

(54) Speichenrückstrahler.

(57) Speichenrückstrahler mit einem Reflektorkörper, auf dessen einer Seite zwei Klipselemente (3, 4) zur, Befestigung dieses Reflektorkörpers an Speichen (5, 6) angebracht sind, wobei jedes dieser Klipselemente (3, 4) aus zwei an dem Reflektorkörper angeformten Schenkeln (7, 8) besteht und jeder dieser Schenkel Führungen und Rasten zur Aufnahme der Speichen aufweist. Diese Führungsflächen und Rasten sind auf der einander zugewandten Seite bogenförmig abgerundet, so daß der Rückstrahler auch bei Rädern Verwendung finden kann, deren Speichen verschiedene Winkel einschließen. Jeweils einer dieser Schenkel ist mit einer federnden Abkröpfung (8e) versehen, so daß auch Speichen unterschiedlichen Durchmessers aufgenommen werden können.

Fig.1

EP 0 129 040 A1

Speichenrückstrahler
=====================

Die Erfindung betrifft einen Speichenrückstrahler, insbesondere für Fahrräder, mit einem Reflektorkörper, auf dessen einer Seite zwei Klipselemente zur Befestigung dieses Reflektorkörpers an Speichen angebracht sind.

Derartige Reflektorkörper werden vorzugsweise in die Speichen von Zweirädern, beispielsweise Fahrrädern oder Motorrädern, eingesetzt, um ein deutliches Erkennen dieser Zweiräder auch von der Seite zu gewährleisten. Hierzu sind bereits verschiedene Ausführungsformen bekannt geworden. Beispielsweise kann der Rückstrahler mit Hilfe einer Klemmvorrichtung an einer Speiche festgelegt werden. Diese Ausführung hat jedoch den Nachteil, daß der Rückstrahler um die Speiche herum verdreht werden kann. Außerdem kann er auch längs der Speiche verschoben werden. Schließlich ist auch die Herstellung relativ aufwendig, da eine gesonderte Klemmvorrichtung gefertigt und mit dem eigentlichen Rückstrahler verbunden werden muß. Die Klemmvorrichtung selbst kann beispielsweise durch federnde Schenkel gebildet werden oder auch durch eine mit dem Reflektorkörper verschraubbare Anpreßplatte, wobei der mechanische Aufwand jedoch in beiden Fällen groß ist und die letztgenannte Ausführung überdies noch den Nachteil einer komplizierten Montage aufweist.

Es ist auch bekannt geworden, den Speichenreflektor an zwei
verschiedenen Speichen festzulegen. Als Beispiel für eine derartige Ausführungsform kann das DE-GM 82 05 616 genannt werden.
Dort ist ein Speichenrückstrahler beschrieben, der aus zwei
gleichartigen Reflektorteilen aufgebaut ist, wobei die seitlichen Enden dieser Reflektorteile Gabeln bilden, die die Speichen
umfassen. Die Speichen werden dabei mittels Einschnappeinrichtungen festgehalten. Bei dieser Ausbildung läßt sich der Speichenrückstrahler zwar nicht mehr um die Speiche herum verdrehen,
jedoch ist nun eine Verdrehung um die senkrecht zu den Reflektorflächen verlaufende Achse möglich. Außerdem kann der Rückstrahler
auch in radialer Richtung in bezug auf das Rad, also auf die Radachse zu oder von dieser weg, verschoben werden. Schließlich ist
auch auf die umständliche Montage eines derartigen Rückstrahlers
hinzuweisen, die dadurch erfolgt, daß die gabelförmig ausgebildeten Enden des Rückstrahlers zunächst in bezug auf das Rad in
radialer Richtung gehalten werden und daß der Rückstrahler dann
verdreht wird, wobei die Speichen in die gabelförmig ausgebildeten
Enden eingreifen. Natürlich ist es auch möglich, einen solchen an
zwei Speichen befestigten Rückstrahler mit Hilfe von Schrauben
oder Klemmvorrichtungen zu befestigen, wodurch sich jedoch wieder
der mechanische Aufwand erhöht.

Die bekannten Ausführungsformen weisen jedoch noch weitere Nachteile auf. Insbesondere die zweipunktbefestigten Rückstrahler
können nicht ohne weiteres bei Rädern eingesetzt werden, deren
Speichen verschiedene Winkel einschließen. Auch ergeben sich
Schwierigkeiten, wenn die Speichen verschiedene Durchmesser aufweisen. Schließlich ist darauf hinzuweisen, daß bei den bekannten
Rückstrahlern nur dann eine ausreichende Signalwirkung erzielt
wird, wenn sie in einem bestimmten Einfallswinkel von Licht getroffen werden, da die Achsen ihrer Prismen alle in einer Richtung ausgerichtet sind.

Die Erfindung hat sich die Aufgabe gestellt, einen Speichenrückstrahler der eingangs genannten Art so auszubilden, daß die genannten Nachteile vermieden werden. Insbesondere soll eine einfache Montage des Speichenrückstrahlers möglich sein. Dabei soll der Rückstrahler im montierten Zustand gegen Verdrehen um die Speichen oder um die senkrecht zu den Reflektorflächen verlaufende Achse sowie gegen ein Verschieben längs der Speichen, also in radialer Richtung zum Rad, gesichert sein. Die Herstellung des Rückstrahlers soll sich möglichst einfach gestalten, wodurch auch ein Kostenvorteil erzielt wird. Schließlich soll der Rückstrahler auch für Räder Verwendung finden können, bei denen die Speichen verschiedene Winkel einschließen.

Diese Aufgabe wird dadurch gelöst, daß jedes der auf einer Seite des Reflektorkörpers angeordneten Klipselemente aus zwei Schenkeln besteht, die Bestandteile des Reflektorkörpers oder eines Teils desselben sind, daß diese Schenkel auf der einander zugewandten Seite jeweils mit nach innen gerichteten Führungsflächen sowie mit Rasten für die Speichen versehen sind und daß diese Führungsflächen und Rasten auf den einander zugewandten Seiten jeweils in Draufsicht bogenförmige Konturen bilden, wobei die Außenseiten dieser bogenförmigen Konturen auf den jeweils anderen Schenkel zu gerichtet sind. Die Anordnung zweier Klipselemente auf der einen Seite des Reflektorkörpers ermöglicht eine einfache Montage des Rückstrahlers durch Aufdrücken auf die Speichen. Komplizierte Befestigungsvorgänge oder die Verwendung von Werkzeug entfallen vollständig. Da jedes Klipselement zwei Schenkel umfaßt, wobei diese Schenkel Bestandteile des Reflektorkörpers oder eines Teils desselben sind, ist die Möglichkeit einer einfachen Herstellung gegeben, beispielsweise in einer schieberfreien Spritzgußform. Beim Aufdrücken des Rückstrahlers auf die Speichen werden die Speichen dabei zunächst von den Führungsflächen der Schenkel aufgenommen, drücken diese auseinander und werden unter Druck in eine entsprechende Rast ges-choben, die den Rückstrahler an den Speichen festhält. Dadurch wird eine weitestgehende Verdreh- und Verschiebesicherheit erreicht. Um die senkrecht zu den Reflektorflächen verlaufende Achse ist eine Verdrehung nicht
möglich, da dies von den Rasten, die die Speichen halten, verhindert wird. Eine Verdrehung um die Speiche ist aufgrund der
Zweipunktbefestigung sowieso nicht möglich. Eine Verschiebung
in radialer Richtung zum Rad schließlich wird ebenfalls durch
die Rasten zuverlässig vermieden.

Die bogenförmigen Konturen der Führungsflächen und Rasten der
die Klipselemente bildenden Schenkel gewährleisten schließlich,
daß der erfindungsgemäße Speichenrückstrahler auch bei Rädern
eingesetzt werden kann, deren Speichen verschiedene Winkel einschließen. Die Speichen liegen dabei an jeweils anderen Punkten
der Rasten bzw. - bei der Montage - der Führungsflächen an.

Als günstig hat es sich erwiesen, die bogenförmigen Konturen
der Führungsflächen bzw. der Rasten als Kreisbogenabschnitte
auszubilden. Die bogenförmigen Konturen gewährleisten dabei
gleichbleibende Eigenschaften für die denkbaren Einsatzfälle.
Ebenfalls vorteilhaft ist es, wenn die Führungsflächen an ihren
äußeren Enden eine Abrundung aufweisen. Das Aufdrücken des Rückstrahlers auf die Speichen gestaltet sich dann besonders einfach,
da die Speichen auch bei ungenauem Aufsetzen des Rückstrahlers
in Richtung der Führungsflächen gezwungen werden.

Ein bereits angeführter Nachteil der bekannten Speichenrückstrahler besteht darin, daß sie für verschiedene Speichendurchmesser
nur eingeschränkt oder gar nicht Verwendung finden können. Eine
vorteilhafte Weiterbildung der Erfindung hat  daher den
Zweck,          diesen Nachteil zu beseitigen. Sie besteht darin,
daß jeweils einer der zu einem Klipselement gehörenden Schenkel
mit einer federnden Abkröpfung versehen ist. Dieser Schenkel ist
somit nachgiebig und paßt sich automatisch dem jeweils gegebenen
Speichendurchmesser an. Die Herstellung gestaltet sich dadurch
nicht aufwendiger, da auch diese Abkröpfung Teil des Reflektorkörpers sein kann, wodurch der Einsatz gesonderter Federelemente

entfällt. Besonders zweckmäßig ist es dabei, wenn die federnde Abkröpfung von der Oberfläche des Reflektorkörpers wegweist. Sie steht also nicht vom Reflektorkörper ab, so daß die Montage desselben nicht behindert wird.

Der Reflektorkörper und die Schenkel der Klipselemente können in an sich bekannter Weise aus Kunststoff gefertigt sein. Diese Herstellungsart ist relativ preisgünstig und bietet überdies den Vorteil, daß eine schieberfreie Spritzgußform verwendet werden kann. Bevorzugt wird der Reflektorkörper aus zwei Teilen zusammengesetzt, die jeweils mit Prismen versehen sind, wobei einer dieser Teile die Klipselemente trägt.

Vorteilhaft ist es weiterhin, wenn der Reflektorkörper oder die Teile desselben Prismen aufweisen und in mehrere Teilbereiche aufgegliedert sind, wobei die diesen Teilbereichen zugeordneten Prismen eine teilweise oder vollständig unterschiedliche Orientierung ihrer Achsen aufweisen. Hierdurch wird auch aus verschiedenen Winkeln einfallendes Licht zumindest jeweils von einem Teilbereich ausreichend reflektiert, so daß der Zweiradfahrer auch aus verschiedenen Sichtwinkeln gut erkannt werden kann.

Weitere Merkmale und Vorteile der Erfindung folgen aus der Beschreibung zur Zeichnung, in der eine bevorzugte Ausführungsform der Erfindung dargestellt ist. Es zeigen:

Fig. 1    eine Draufsicht auf einen erfindungsgemäßen Speichenrückstrahler von der Seite, auf der die Klipselemente angeordnet sind, d.h. von der Seite, auf der der Rückstrahler mit den Speichen verbunden wird,

Fig. 2    einen Schnitt gemäß der Bezugslinie II-II der Fig. 1,

Fig. 3   eine Stirnansicht des eingebauten Speichenrückstrahlers,

Fig. 4   die Rückseite des in der Fig. 1 dargestellten Rückstrahlers und

Fig. 5   Schnitte durch den Rückstrahler in Richtung der Bezugs-
bis  8   linien V-V bis VIII-VIII der Fig. 4.

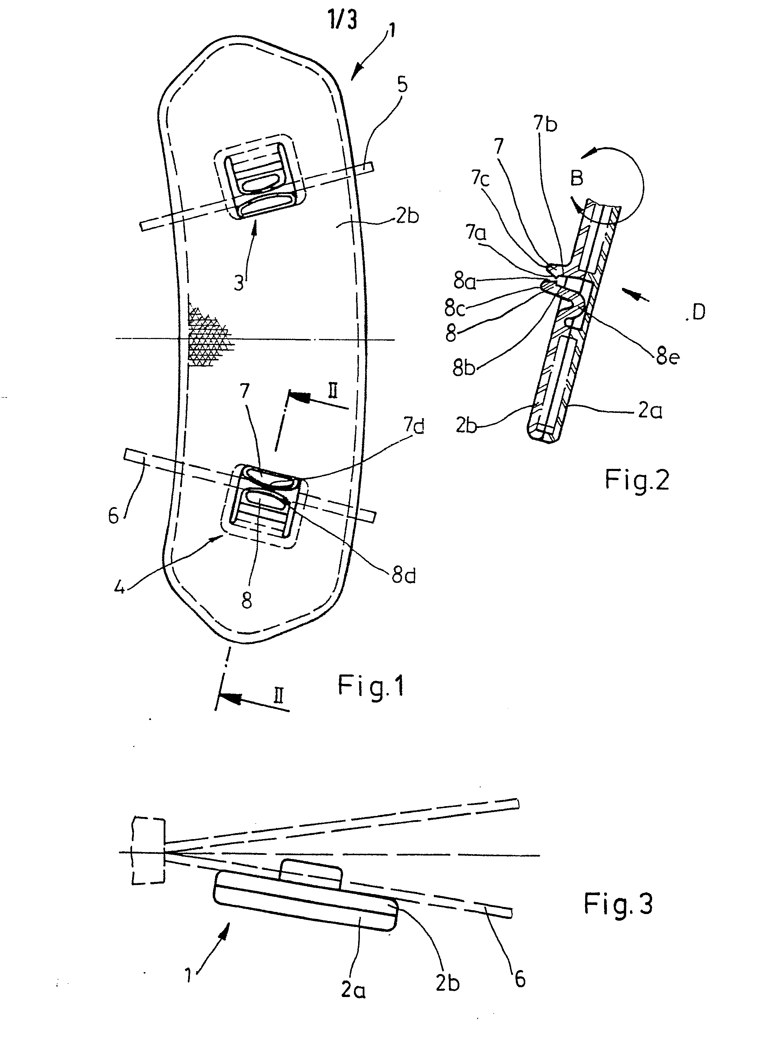

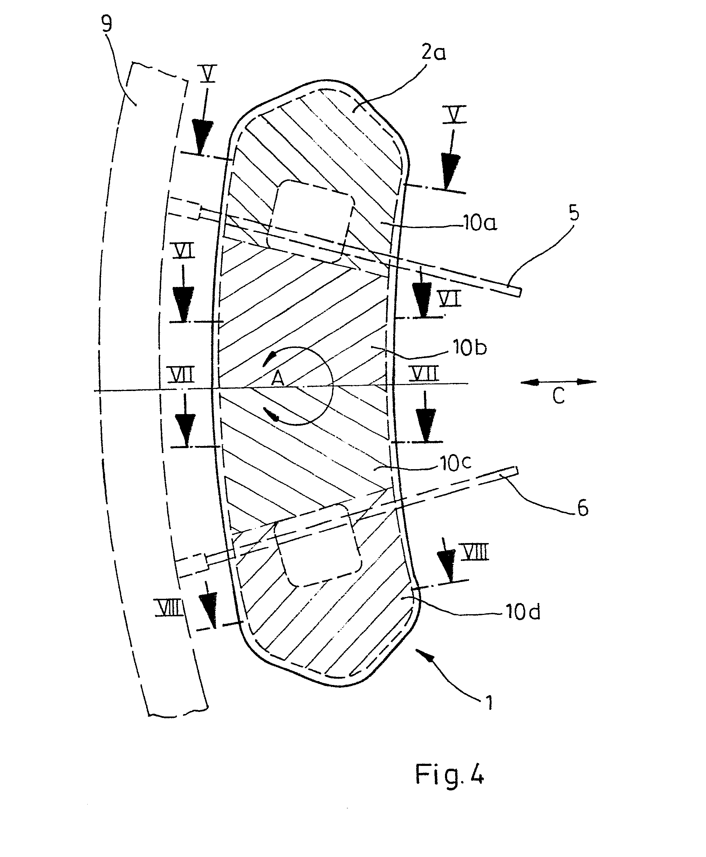

Der in den Fig. 1 und 3 dargestellte und im ganzen mit 1 bezeichnete Speichenrückstrahler besteht aus einem aus zwei Teilen 2a und 2b aufgebauten, vorzugsweise aus Kunststoff gefertigten Reflektorkörper. Die beiden Teile 2a und 2b des Reflektorkörpers sind dabei auf der Innenseite mit Prismen versehen, die einfallendes Licht reflektieren. Der Teil 2b trägt zwei Klipselemente 3 und 4, mit denen der Speichenrückstrahler auf die nur schematisch angedeuteten Speichen 5 und 6 aufgedrückt werden kann. Diese Befestigungsart hat den Vorteil einer leichten Montierbarkeit und gewährleistet darüber hinaus, daß der Speichenrückstrahler nicht um die senkrecht zu den Reflektorflächen verlaufende Achse, wie in Fig. 4 mit Pfeil A angedeutet, verdreht werden kann. Eine Verdrehung um die Speichen, wie durch den Pfeil B der Fig. 2 angedeutet, ist durch die Zweipunktaufhängung sowieso nicht möglich. Schließlich wird auch ein Verschieben in radialer Richtung zur Radachse, wie durch den Pfeil C der Fig. 4 symbolisiert, vermieden, da die Klipselemente 3 und 4 in tangentialer Richtung nur begrenzt nachgiebig sind.

Der Aufbau eines einzelnen Klipselements soll nun am Beispiel des Klipselements 4 anhand der Fig. 1 und 2 näher erläutert werden. Dieses Klipselement 4 besteht im wesentlichen aus zwei an den Reflektorteil 2b angeformten Schenkeln 7 und 8. Diese Schenkel 7 und 8 sind mit Führungsflächen 7a und 8a versehen, in die die Speiche beim Montiervorgang eingelegt wird. Durch Ausübung von Druck auf den Reflektorkörper in Richtung des Pfeiles D wird die Speiche entlang diesen Führungsflächen auf den Reflektorkörper zu gedrückt und gelangt dort in Rasten 7b und 8b, von denen sie gehalten wird. Das Einführen der Speiche wird erleichtert durch an den Führungsflächen vorgesehenen Abrundungen 7c und 8c.

Wie aus der Fig. 1 zu erkennen ist, sind die Führungsflächen und die Rasten mit aufeinander zuweisenden bogenförmigen Konturen 7d und 8d versehen. Diese bogenförmigen, vorzugsweise kreisbogenförmigen Konturen gewährleisten eine sichere Befestigung auch auf Rädern, bei denen die Speichen verschiedene Winkel einschließen.

Aus der Fig. 2 ist außerdem zu erkennen, daß der Schenkel 8 mit einer von der Oberfläche des Reflektorkörpers wegweisenden federnden Abkröpfung 8e versehen ist. Diese Abkröpfung gewährleistet, daß Speichen verschiedenen Durchmessers aufgenommen werden können, da der Schenkel 8 durch diese Abkröpfung etwas nachgeben kann und sich daher auch an Speichen größeren Durchmessers anlegt.

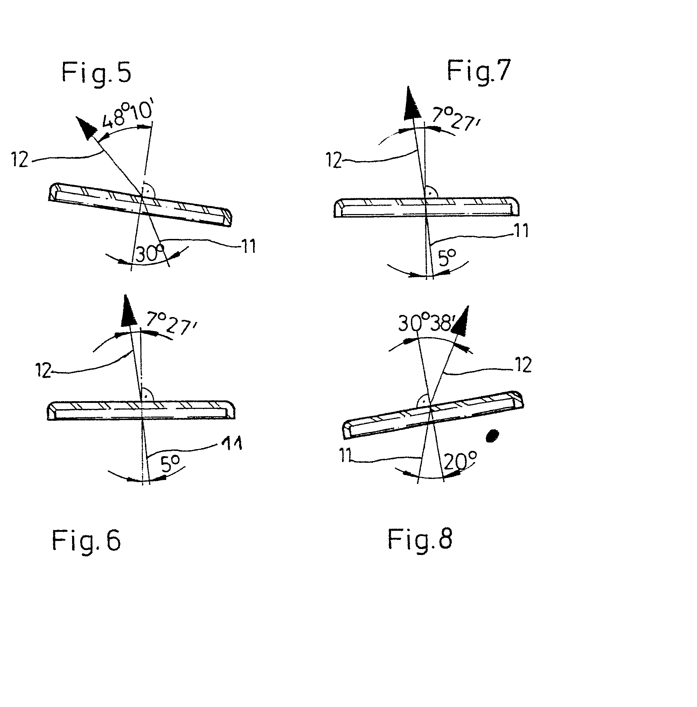

Die Rückseite des in der Fig. 1 dargestellten Speichenrück-strahlers ist nochmals in der Fig. 4 gezeigt, wobei dort der Reflektorteil 2a zu erkennen ist. Angedeutet ist außerdem die Felge 9 eines Rades. Diese Figur zeigt - was aus Gründen der Übersichtlichkeit aus der Fig. 1 nicht zu entnehmen ist -, daß jeder Reflektorteil in mehrere Teilbereiche 10a bis 10d aufgegliedert ist. Diese einzelnen Teilbereiche weisen jeweils andere Orientierung der Achsen der Prismen auf, wie auch den Fig. 5 bis 8 zu entnehmen ist, wo die Achsen der Prismen jeweils mit 11 und die bevorzugte Signalrichtung mit 12 angegeben ist und in denen beispielshaft auch Winkel dieser Achsen bzw. Signalrichtungen zur Senkrechten eingetragen sind. Diese Ausbildung hat den Vorteil, daß eine ausreichende Signalwirkung auch bei verschiedenen Lichteinfallswinkeln gewährleistet ist, da zumindest immer ein Teilbereich wirksam ist.

—1—

Ansprüche
=========

1. Speichenrückstrahler, insbesondere für Fahrräder, mit einem
Reflektorkörper, auf dessen einer Seite zwei Klipselemente
zur Befestigung dieses Reflektorkörpers an Speichen angebracht sind, dadurch gekennzeichnet, daß jedes der Klipselemente (3, 4) aus zwei Schenkeln (7, 8) besteht, die Bestandteile des Reflektorkörpers oder eines Teils (2b) desselben sind, daß diese Schenkel (7, 8) auf der einander zugewandten Seite jeweils mit nach innen gerichteten Führungsflächen (7a, 8a) sowie mit Rasten (7b, 8b) für die Speichen
(5, 6) versehen sind und daß diese Führungsflächen (7a, 8a)
und Rasten (7b, 8b) auf den einander zugewandten Seiten jeweils in Draufsicht bogenförmige Konturen (7d, 8d) bilden,
wobei die Außenseiten dieser bogenförmigen Konturen (7d, 8d)
auf den jeweils anderen Schenkel zugerichtet sind.

2. Speichenrückstrahler nach Anspruch 1, dadurch gekennzeichnet,
daß die bogenförmigen Konturen (7d, 8d) der Führungsflächen
(7a, 8a) bzw. Rasten (7b, 8b) Kreisbogenabschnitte sind.

**0129040**

3. Speichenrückstrahler nach Anspruch 1 oder 2, dadurch gekennzeichnet, daß die Führungsflächen (7a, 8a) an ihren äußeren
   Enden Abrundungen (7c, 8c) aufweisen.

4. Speichenrückstrahler nach einem oder mehreren der Ansprüche
   1 bis 3, dadurch gekennzeichnet, daß jeweils einer der zu
   einem Klipselement (3, 4) gehörenden Schenkel (8) mit einer
   federnden Abkröpfung (8e) versehen ist.

5. Speichenrückstrahler nach Anspruch 4, dadurch gekennzeichnet,
   daß die federnde Abkröpfung (8e) von der Oberfläche des
   Reflektorkörpers (2b) wegweist.

6. Speichenrückstrahler nach mindestens einem der vorhergehenden
   Ansprüche, dadurch gekennzeichnet, daß der Reflektorkörper
   (2a, 2b) und die Schenkel (7, 8) der Klipselemente (3, 4) aus
   Kunststoff gefertigt sind.

7. Speichenrückstrahler, insbesondere nach einem oder mehreren
   der Ansprüche 1 bis 6, dadurch gekennzeichnet, daß der Reflektorkörper oder die Teile desselben Prismen aufweisen und
   in mehrere Teilbereiche (10a-10d) aufgegliedert sind, wobei
   die diesen Teilbereichen (10a-10d) zugeordneten Prismen eine
   teilweise oder vollständig unterschiedliche Orientierung
   ihrer Achsen aufweisen.

0129040

Fig.1

Fig.2

Fig.3

0129040

9

2a

V

V

10a

5

VI

VI

VII

A

10b

VII

C

10c

6

VIII

VIII

10d

1

Fig. 4

Fig.5

48°10'

12

30°

11

Fig.6

7°27'

12

5°

11

Fig.7

7°27'

12

5°

11

Fig.8

30°38'

12

11

20°

Europäisches
Patentamt

# EUROPÄISCHER RECHERCHENBERICHT

EP 84 10 5273

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-3 887 268 (GOLDEN) <br> * Figur 20; Figuren 2-4 * | 1,7 | B 62 J 5/20 |
| | --- | | |
| A | DE-A-3 211 350 (MÜLLER) <br> * Figuren 1-3 * | 1 | |
| | --- | | |
| A | US-A-3 781 082 (LINDER) <br> * Figuren 5,8 * | 1 | |
| | ----- | | |

**RECHERCHIERTE SACHGEBIETE (Int Cl 3)**

B 62 J 5/20
B 60 B 7/00

Der vorliegende Recherchenbericht wurde für alle Patentansprüche erstellt.

| Recherchenort <br> DEN HAAG | Abschlußdatum der Recherche <br> 06-09-1984 | Prüfer <br> ONILLON C.G.A. |
|---|---|---|